# EUROPEAN PATENT SPECIFICATION

(11) **EP 2 601 007 B1**
(45) Date of publication and mention of the grant of the patent: **21.03.2018**
(21) Application number: 11764284.3
(22) Date of filing: 05.08.2011
(51) Int. Cl.: B23K 33/00, B23K 37/04, B21D 39/03

(54) **WELDED STRUCTURE AND WELDING METHOD**
GESCHWEISSTE STRUKTUR UND SCHWEISSVERFAHREN
STRUCURE SOUDÉE ET MÉTHODE DE SOUDAGE

(30) Priority: 06.08.2010 JP 2010177500
(43) Date of publication of application: 12.06.2013
(73) Proprietor: Toyota Jidosha Kabushiki Kaisha, Toyota-shi, Aichi 471-8571 (JP)
(72) Inventor: SHIMA, Kenta, Toyota-shi Aichi-ken 471-8571 (JP); KAWAKITA, Atsushi, Toyota-shi Aichi-ken 471-8571 (JP); SEKIGUCHI, Tomohiko, Toyota-shi Aichi-ken 471-8571 (JP)
(74) Representative: Intès, Didier Gérard André
(86) International application number: PCT/IB2011/001826
(87) International publication number: WO 2012/017311

(56) References cited:
- FR-A1- 2 934 236
- US-A- 5 564 192
- US-A1- 2010 080 696

## Description

### BACKGROUND OF THE INVENTION

### 1. Field of the Invention

The invention relates to a welded structure and a welding method. More particularly, the invention relates to technology that improves the positioning accuracy of sheet-shaped members when welding the members together.

### 2. Description of Related Art

Japanese Patent Application Publication No. 4-351276 (JP-A-4-351276) and Japanese Patent Application Publication No. 2003-103376 (JP-A-2003-103376), for example, describe technology in which, when welding sheet-shaped members together, a circular hole is provided in one part to be welded, and a round protruding portion is provided on another part to be welded. The other part is positioned with respect to the one part with the protruding portion fitted into the circular hole, and the welding is then performed.

With the technology described in JP-A-4-351276 and JP-A-2003-103376, when forming the protruding portion on a part to be welded, typically the height of the protruding portion is approximately half the thickness of the sheet. For example, when a thin sheet such as a body part of a vehicle is used, the height of a machinable protruding portion is approximately 0.3 mm to 1.2 mm with respect to the sheet thickness (approximately 0.6 mm to 2.5 mm). As with a body part, in a large sheet metal press, the clearance may shrink by approximately 1 mm due to precision error or the like, which makes it difficult to stably ensure the height of the protruding portion.

Also, as described above, the height of the protruding portion is approximately 0.3 mm to 1.2 mm, so if the clearance shrinks by approximately 1 mm, the parts may become offset from one another when they are positioned. Such an offset is difficult to determine. Furthermore, the overlap between the protruding portion and the circular hole is small, so the parts may disengage from each other or assembly offset may occur, due to the effect of the magnetic field or elastic deformation of the parts during welding.

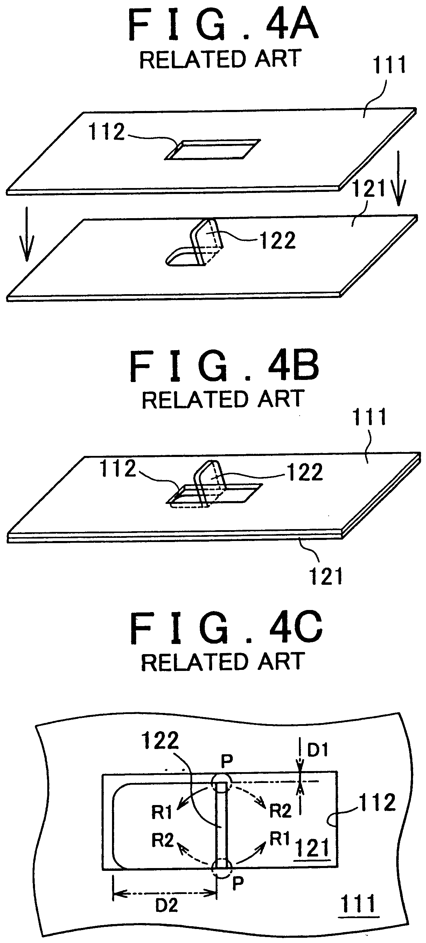

On the other hand, technology is known in which a hole 112 is provided in one part 111 to be welded, a U-shaped slit, for example, is made in another part 121 to be welded, and this slit portion is bent upright to form a pawl-shaped protruding portion 122, as shown in FIG. 4A. According to this technology, the protruding portion 122 of the other part 121 is inserted into the hole 112 of the one part 111, as shown by the arrow in FIG. 4A. The other part 121 can then be positioned with respect to the one part 111 and welded thereto, with the protruding portion 122 engaged with the hole 112, as shown in FIG. 4B.

With this technology, the protruding portion 122 engages with the hole 112 with a gap D1 formed between end portions P of the protruding portion 122 and an inner peripheral surface of the hole 112, as shown in FIG 4C. Also, the portions of the protruding portion 122 that are able to contact the inner peripheral surface of the hole 112 are only the two end portions P of the protruding portion 122. Therefore, rotation of the protruding portion 122 inside the hole 112, as shown by arrows R1 or arrows R2 in FIG. 4C, is not able to be restricted. That is, if the protruding portion 122 rotates in the hole 112, the positioning accuracy of the parts 111 and 121 may decrease.

Also, the size of the hole that is formed when forming the protruding portion 122 on the other part 121 (i.e., arrow D2 in FIG. 4C) may be larger than a sealable range (that is approximately several millimeters) when sealing using paint sealer. In this case, the hole through both of the parts 111 and 121 becomes larger, so both parts 111 and 121 may not be able to be sealed. That is, when welding members in which high seal performance is required, such as members of an under body floor portion, for example, this technology cannot be applied.

Document FR-A-2 934 236 discloses a method of positioning first and second parts to be welded to obtain a portion of a car body, wherein a first member has an opening and the second member has a corresponding protrusion obtained by stamping positioned in said opening.

### SUMMARY OF THE INVENTION

The invention thus provides a welded structure and a welding method, capable of improving sealability, while ensuring the positioning accuracy of parts to be welded.

A first aspect of the invention relates to a welded structure according to claim 1.

A second aspect of the invention relates to a welding method in accordance with claim 2.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1A is a view of parts to be welded that are used in a welded structure according to a first example embodiment of the invention;
FIG 1B is a view of the structure of the welded structure according to the first example embodiment of the invention;
FIG. 2A is a view of a manufacturing process of a second part to be welded;
FIG. 2B is a sectional view taken along line C - C in FIG 2A of the manufacturing process of the second part to be welded;
FIG 3A1 is a sectional view taken along line A - A in FIG 1B;

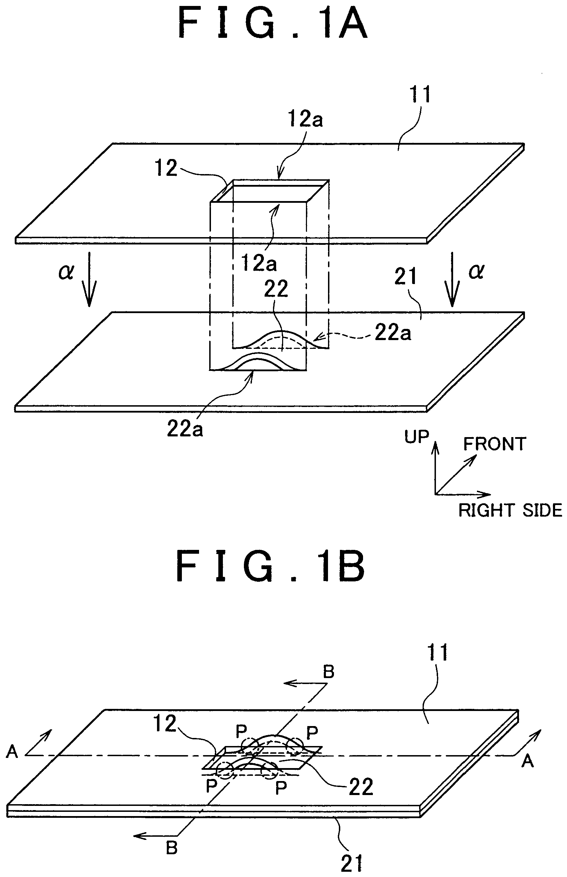

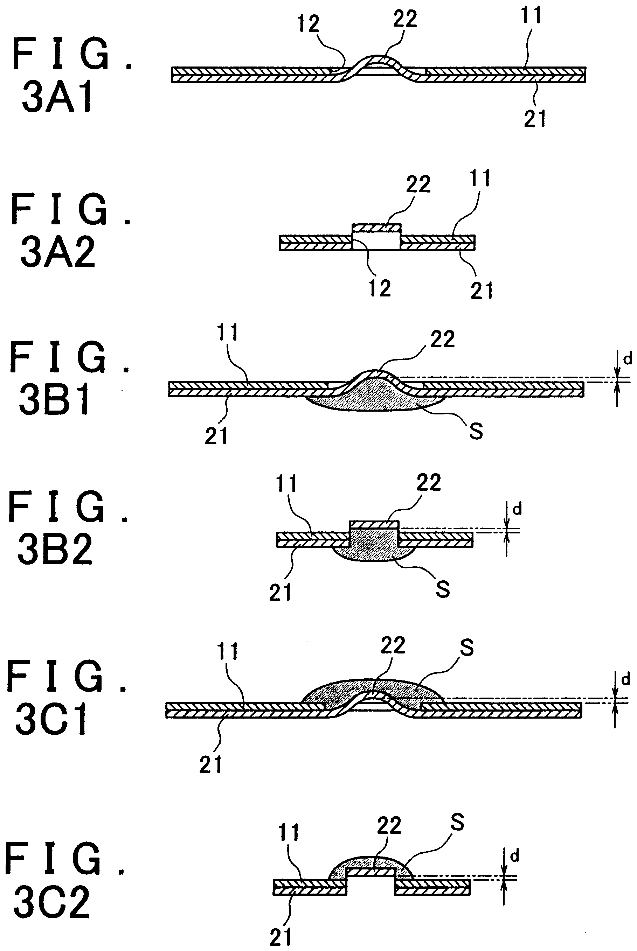

FIG. 3A2 is a sectional view taken along line B - B in FIG. 1B;
FIG 3B1 is a sectional view taken along line A - A in FIG. 1B of a first sealed state;
FIG 3B2 is a sectional view taken along line B - B in FIG. 1B of the first sealed state;
FIG. 3C1 is a sectional view taken along line A - A in FIG 1B of a second sealed state;
FIG. 3C2 is a sectional view taken along line B - B in FIG. 1B of the second sealed state;
FIG. 4A is a view of parts to be welded that are used in a welded structure according to related art;
FIG. 4B is a view of the structure of the welded structure according to related art; and
FIG 4C is a plan view of an engaging portion of the welded structure according to related art.

### DETAILED DESCRIPTION OF EMBODIMENTS

A welded structure according to a first example embodiment of the invention will be described with reference to FIGS. 1A and 1B. In order to simplify the description in this specification, the upper side in FIG 1A will be referred to as up with respect to the welded structure, the right side in FIG. 1A will be referred to as the right side of the welded structure, and the side away from the surface of the paper on which FIG. 1A is drawn will be will referred to as the front.

As shown in FIGS. 1A and 1B, the welded structure according to this example embodiment is used to position a sheet-shaped second part to be welded 21 with respect to a sheet-shaped first part to be welded 11, and weld the first part to be welded 11 to the second part to be welded 21.

A rectangular hole 12 having two opposing sides 12a is opened in the first part to be welded 11. The hole 12 may be any shape, such as oval, as long as it has the two opposing sides 12a. Meanwhile, two slits 22a are formed in the second part to be welded 21, at portions corresponding to the two opposing sides 12a in positions corresponding to the hole 12 that is open in the first part to be welded 11. A portion between these slits 22a is then made to protrude approximately several millimeters by plastic deformation to form a bridge portion 22. That is, the bridge portion 22 is formed in a mountain-shape, protruding upward with slopes formed to the left and the right. A gap in the front-back direction when viewed from the front-back direction is formed between this bridge portion 22 and the upper surface of the second part to be welded 21. In this example embodiment, the two slits 22a are parallel to one another and do not intersect each another. Also, the two slits 22a may be straight or curved. In this example embodiment, they are straight.

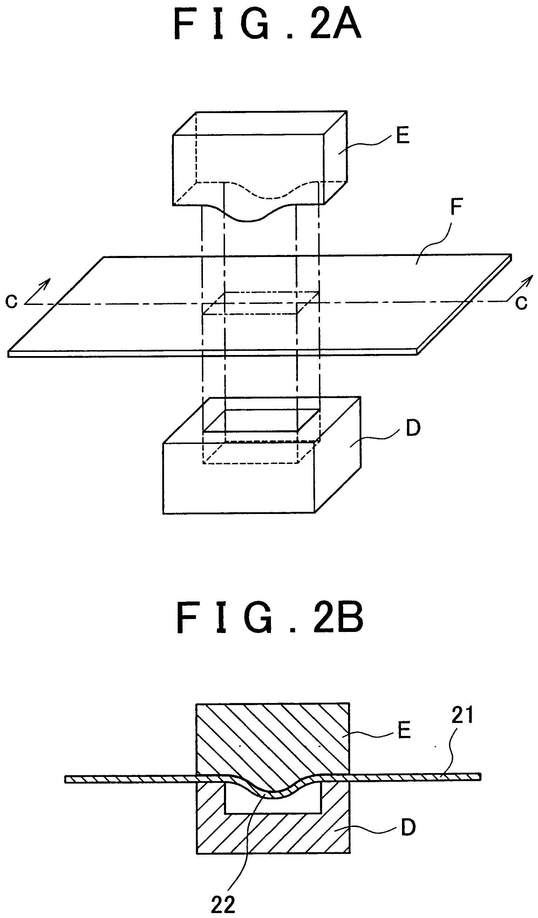

The second part to be welded 21 is press-formed by a pressing machine, not shown, that includes a punch E and a die D. That is, the punch E that has a shape of a bridge portion 22 formed on it is brought toward the die D that has a hole in it that is formed the size of the bridge portion 22 to enable the tip end portion of the punch E to be inserted, while a sheet-shaped member F that is the material of the second part to be welded 21 is arranged between the punch E and the die D, as shown in FIG. 2A. The bridge portion 22 is then formed simultaneously with the plastic deformation of the portion of the sheet-shaped member F that corresponds to the punch E, and the formation of the two slits 22a in the second part to be welded 21, as shown in FIG. 2B.

The first part to be welded 11 and the second part to be welded 21 that are formed as described above are brought together as indicated by the arrow a in FIG. 1A. That is, the raised portion of the bridge portion 22 of the second part to be welded 21 is inserted into the hole 12 of the first part to be welded 11 such that the two sides 12a of the hole 12 of the first part to be welded 11 overlap with the two slits 22a of the bridge portion 22 of the second part to be welded 21. Then the first part to be welded 11 is welded to the second part to be welded 21 in a state in which the first part to be welded 11 is engaged with the second part to be welded 21, as shown in FIGS. 1B, 3A1, and 3A2.

With the welded structure according to this example embodiment, the engaged state of the first part to be welded 11 and the second part to be welded 21 is able to be made stable. That is, the bridge portion 22 that protrudes approximately several millimeters (approximately 2.0 to 4.0 mm) and is the same height as, or higher than, the sheet thickness (approximately 0.6 mm to 2.5 mm in this example embodiment) of the first part to be welded 11 from plastic deformation, is formed on the second part to be welded 21. As a result, when the first part to be welded 11 is engaged with the second part to be welded 21, the positioning accuracy with respect to the sheet-thickness of the first part to be welded 11 is able to be sufficiently ensured. In other words, the overlap of the bridge portion 22 and the hole 12 is able to be sufficiently ensured, which enables assembly offset or an offset in the engaged state of the first part to be welded 11 and the second part to be welded 21, due to the effect of the magnetic field or elastic deformation during welding, to be prevented.

Also, with the welded structure according to this example embodiment, the bridge portion 22 is able to contact the two sides 12a, i.e., the inner peripheral surface of the hole 12, at four locations, as shown by points P in FIG 1B. That is, the bridge portion 22 contacts the inner peripheral surface of the hole 12 at a plurality of locations (four in this example embodiment) in the left-right direction, as well as at a plurality of locations (four in this example embodiment) in the front-back direction. Therefore, even if there is a gap between the bridge portion 22 and the inner peripheral surface of the hole 12, for example, the bridge portion 22 will abut against the two sides 12a of the hole 12 if the bridge portion 22 attempts to rotate in the hole 12. That is, rotation of the bridge portion 22 in the hole 12 is able to be restricted, so a decrease in the positioning accuracy of the first part to be welded 11 and the second part to be welded 21 due to the bridge portion 22 rotating in the hole 12 is able to be prevented.

Moreover, when the first part to be welded 11 is engaged with the second part to be welded 21, the hole that passes through the first part to be welded 11 and the second part to be welded 21 is able to be made smaller. More specifically, the gap d through the first part to be welded 11 and the second part to be welded 21 can be made smaller than a sealable range (that is approximately several millimeters (2.0 to 4.0 mm)) when sealing by applying paint sealer S, as shown in FIGS. 3B1 and 3B2. As a result, the sealing performance of the first part to be welded 11 and the second part to be welded 21 can be improved. That is, the welded structure according to this example embodiment can be applied even when welding members in which high sealing performance is required, such as members of an under body floor portion, for example.

Also, the sealing performance is not affected by the side on which sealing is performed. That is, the size of the gap d through the first part to be welded 11 and the second part to be welded 21 does not change, so high sealing performance can be ensured regardless of whether sealing is performed from the side of the second part to be welded 21, as shown in FIGS. 3B1 and 3B2, or from the side of the first part to be welded 11, as shown in FIGS. 3C1 and 3C2.

In the example embodiment described above, the bridge portion 22 may also include a plurality of raised portions. For example, at least one of the plurality of raised portions and at least one raised portion other than the at least one raised portion, from among the plurality of raised portions, may protrude in different vertical directions from the surface of the second part to be welded 21. That is, at least one of the raised portions may protrude upward, and at least one raised portion other than the at least one raised portion may protrude downward. This structure enables one part to be welded to be welded to the top of the second part to be welded 21 and one part to be welded to be welded to the bottom of the second part to be welded 21.

In the example embodiment described above, the number of slits is not limited to two, and may also be three or more, as long as the bridge portion 22 contacts the inner peripheral surface of the hole 12 at a plurality of locations in the left-right direction, as well as at a plurality of locations in the front-back direction. For example, a slit that connects either the left end portions or the right end portions of the two slits 22a together may be provided. In this case, the bridge portion 22 may be retained by either the left end portion or the right end portion, whichever is not provided with the slit.

While the invention has been described with reference to example embodiments thereof, it is to be understood that the invention is not limited to the described embodiments or constructions. To the contrary, the invention is intended to cover various modifications and equivalent arrangements. In addition, while the various elements of the disclosed invention are shown in various example combinations and configurations, other combinations and configurations, including more, less or only a single element. These variations and equivalents are covered by the present invention as far as they fall within the scope of the appended claims.

## Claims

1. A welded structure in which a sheet-shaped second part (21) to be welded is positioned with respect to a sheet-shaped first part (11) to be welded,
wherein a hole (12) is formed in the first part (11) to be welded and has two opposing sides (12a), and the first part (11) to be welded and the second part (21) to be welded are welded together, while the first part (11) to be welded and the second part (21) to be welded are engaged, **characterized in that** the welded structure is a member of an under body floor portion; and **in that** it comprises:
two slits (22a) that are formed in the second part (21) to be welded, at portions corresponding to the two opposing sides (12a) in positions corresponding to the hole (12) that is open in the first part (11) to be welded; and
a bridge portion (22) that is made to protrude by plastic deforming a portion between the two slits (22a),
wherein the first part (11) to be welded is welded to the second part (21) to be welded while the first part (11) to be welded and the second part (21) to be welded are engaged, with a raised portion of the bridge portion (22) of the second part (21) to be welded inserted into the hole (12) of the first part (11) to be welded, such that the two opposing sides (12a) of the hole (12) in the first part (11) to be welded overlap with the two slits (22a) in the bridge portion (22) of the second part (21) to be welded, and
a gap (d) between a lower surface of the bridge portion (22) and an upper surface of the first part (11) around the hole (12) is made smaller than a sealable range after welding, the sealable range being a range of 2.0 to 4.0 mm.

2. A welding method for positioning a sheet-shaped second part (21) to be welded with respect to a sheet-shaped first part to be welded, and welding the first part (11) to be welded and the second part (21) to be welded together while the first part (11) to be welded and the second part (21) to be welded are engaged, comprising:
opening a hole (12) that has two opposing sides (12a), in the first part (11) to be welded;
and **characterized by**:
making two slits (22a) in portions of the second part (21) to be welded, at portions corresponding to the two opposing sides (12a) in positions corresponding to the hole (12) opened in the first part (11) to be welded;
providing a bridge portion (22) that is made to protrude by plastic deforming a portion between the two slits (22a);
welding the first part (11) to be welded to the second part (21) to be welded while the first part (11) to be welded and the second part (21) to be welded are engaged, with a raised portion of the bridge portion (22) of the second part (21) to be welded inserted into the hole (12) of the first part (11) to be welded, such that the two opposing sides (12a) of the hole (12) in the first part (11) to be welded overlap with the two slits (22a) in the bridge portion (22) of the second part (21) to be welded, so as to obtain a member of an under body floor portion, and
wherein
a gap (d) between a lower surface of the bridge portion (22) and an upper surface of the first part (11) around the hole (12) is made smaller than a sealable range after welding, the sealable range being a range of 2.0 to 4.0 mm.

## Patentansprüche

1. Geschweißte Struktur, bei der ein plattenförmiges zu schweißendes zweites Teil (21) in Bezug auf ein plattenförmiges zu schweißendes erstes Teil (11) positioniert wird, wobei in dem zu schweißenden ersten Teil (11) ein Loch (12) gebildet ist, das zwei gegenüberliegende Seiten (12a) aufweist, und das zu schweißende erste Teil (11) und das zu schweißende zweite Teil (21) zusammengeschweißt werden, während das zu schweißende erste Teil (11) und das zu schweißende zweite Teil (21) in Eingriff stehen,
**dadurch gekennzeichnet, dass** die geschweißte Struktur ein Element eines Unterboden-Bodenabschnitts ist, und dadurch, dass
zwei Schlitze (22a) in dem zu schweißenden zweiten Teil (21) an den zwei gegenüberliegenden Seiten (12a) entsprechenden Abschnitten in Positionen gebildet sind, die dem Loch (12), das in dem zu schweißenden ersten Teil (11) offen ist, entsprechen, und
ein Brückenabschnitt (22) durch plastisches Verformen eines Abschnitts zwischen den zwei Schlitzen (22a) dazu gebracht wird, vorzuragen,
wobei das zu schweißende erste Teil (11) an das zu schweißende zweite Teil (21) geschweißt wird, während das zu schweißende erste Teil (11) und das zu schweißende zweite Teil (21) in Eingriff stehen, wobei ein erhabener Abschnitt des Brückenabschnitts (22) des zu schweißenden zweiten Teils (21) in das Loch (12) des zu schweißenden ersten Teils (11) eingesetzt ist, derart, dass die zwei gegenüberliegenden Seiten (12a) des Lochs (12) in dem zu schweißenden ersten Teil (11) die zwei Schlitze (22a) in dem Brückenabschnitt (22) des zu schweißenden zweiten Teils (21) überlappen, und
ein Spalt (d) zwischen einer unteren Oberfläche des Brückenabschnitts (22) und einer oberen Oberfläche des ersten Teils (11) um das Loch (12) herum nach dem Schweißen kleiner als ein versiegelbarer Bereich ausgelegt ist, wobei der versiegelbare Bereich ein Bereich von 2,0 bis 4,0 mm ist.

2. Schweißverfahren zum Positionieren eines plattenförmigen zu schweißenden zweiten Teils (21) in Bezug auf ein plattenförmiges zu schweißendes erstes Teil und Zusammenschweißen des zu schweißenden ersten Teils (11) und des zu schweißenden zweiten Teils (21), während das zu schweißende erste Teil (11) und das zu schweißende zweite Teil (21) in Eingriff stehen, umfassend:
Öffnen eines Lochs (12), das zwei gegenüberliegende Seiten (12a) aufweist, in dem zu schweißenden ersten Teil (11),
und **gekennzeichnet, durch**:
Herstellen von zwei Schlitzen (22a) in Abschnitten des zu schweißenden zweiten Teils (21) an den zwei gegenüberliegenden Seiten (12a) entsprechenden Abschnitten in Positionen, die dem Loch (12), das in dem zu schweißenden ersten Teil (11) geöffnet wird, entsprechen,
Bereitstellen eines Brückenabschnitts (22), der durch plastisches Verformen eines Abschnitts zwischen den zwei Schlitzen (22a) dazu gebracht wird, vorzuragen,
Schweißen des zu schweißenden ersten Teils (11) an das zu schweißende zweite Teil (21), während das zu schweißende erste Teil (11) und das zu schweißende zweite Teil (21) in Eingriff stehen, wobei ein erhabener Abschnitt des Brückenabschnitts (22) des zu schweißenden zweiten Teils (21) in das Loch (12) des zu schweißenden ersten Teils (11) eingesetzt ist, derart, dass die zwei gegenüberliegenden Seiten (12a) des Lochs (12) in dem zu schweißenden ersten Teil (11) die zwei Schlitze (22a) in dem Brückenabschnitt (22) des zu schweißenden zweiten Teils (21) überlappen, um ein Element eines Unterboden-Bodenabschnitts zu erhalten, und wobei
ein Spalt (d) zwischen einer unteren Oberfläche des Brückenabschnitts (22) und einer oberen Oberfläche des ersten Teils (11) um das Loch (12) herum nach dem Schweißen kleiner als ein versiegelbarer Bereich ausgelegt ist, wobei der versiegelbare Bereich ein Bereich von 2,0 bis 4,0 mm ist.

## Revendications

1. Structure soudée dans laquelle une deuxième partie en forme de tôle (21) devant être soudée est positionnée par rapport à une première partie en forme de tôle (11) devant être soudée, dans laquelle un trou (12) est formé dans la première partie (11) devant être soudée et a deux côtés opposés (12a), et la première partie (11) devant être soudée et la deuxième partie (21) devant être soudée sont soudées ensemble, alors que la première partie (11) devant être soudée et la deuxième partie (21) devant être soudée sont engagées, **caractérisée en ce que** la structure soudée est un élément d'une partie de plancher de soubassement ; et **en ce qu'**elle comprend
deux fentes (22a) qui sont formées dans la deuxième partie (21) devant être soudée, au niveau de parties correspondant aux deux côtés opposés (12a) dans des positions correspondant au trou (12) qui est ouvert dans la première partie (11) devant être soudée ; et
une partie de pont (22) qui est amenée à dépasser par déformation plastique d'une partie entre les deux fentes (22a),
dans laquelle la première partie (11) devant être soudée est soudée sur la deuxième partie (21) devant être soudée alors que la première partie (11) devant être soudée et la deuxième partie (21) devant être soudée sont engagées, avec une partie relevée de la partie de pont (22) de la deuxième partie (21) devant être soudée insérée dans le trou (12) de la première partie (11) devant être soudée, de telle sorte que les deux côtés opposés (12a) du trou (12) dans la première partie (11) devant être soudée chevauchent les deux fentes (22a) dans la partie de pont (22) de la deuxième partie (21) devant être soudée, et
un espace (d) entre une surface inférieure de la partie de pont (22) et une surface supérieure de la première partie (11) autour du trou (12) est rendu plus petit qu'une plage pouvant être scellée après soudage, la plage pouvant être scellée étant une plage de 2,0 à 4,0 mm.

2. Procédé de soudage destiné à positionner une deuxième partie en forme de tôle (21) devant être soudée par rapport à une première partie en forme de tôle devant être soudée, et souder la première partie (11) devant être soudée et la deuxième partie (21) devant être soudée ensemble alors que la première partie (11) devant être soudée et la deuxième partie (21) devant être soudée sont engagées, comportant le fait de :
ouvrir un trou (12) qui a deux côtés opposés (12a), dans la première partie (11) devant être soudée ;
et **caractérisé par** le fait de :
réaliser deux fentes (22a) dans des parties de la deuxième partie (21) devant être soudée, au niveau de parties correspondant aux deux côtés opposés (12a) dans des positions correspondant au trou (12) ouvert dans la première partie (11) devant être soudée ;
prévoir une partie de pont (22) qui est amenée à dépasser par déformation plastique d'une partie entre les deux fentes (22a) ;
souder la première partie (11) devant être soudée sur la deuxième partie (21) devant être soudée alors que la première partie (11) devant être soudée et la deuxième partie (21) devant être soudée sont engagées, avec une partie relévée de la partie de pont (22) de la deuxième partie (21) devant être soudée insérée dans le trou (12) de la première partie (11) devant être soudée, de telle sorte que les deux côtés opposés (12a) du trou (12) dans la première partie (11) devant être soudée chevauchent les deux fentes (22a) dans la partie de pont (22) de la deuxième partie (21) devant être soudée de façon à obtenir un élément d'une partie de plancher de soubassement, et
un espace (d) entre une surface inférieure de la partie de pont (22) et une surface supérieure de la première partie (11) autour du trou (12) est rendu plus petit qu'une plage pouvant être scellée après soudage, la plage pouvant être scellée étant une plage de 2,0 à 4,0 mm.
